# EUROPEAN PATENT SPECIFICATION

(11) **EP 3 299 339 B1**
(45) Date of publication and mention of the grant of the patent: **05.08.2020**
(21) Application number: 17753404.7
(22) Date of filing: 07.02.2017
(51) Int. Cl.: C01B 33/152, B65H 35/06, B65H 37/00, C01B 33/14, C01B 33/158, C01B 33/145, C01B 33/155

(54) **METHOD AND APPARATUS FOR MANUFACTURING AEROGEL SHEET**
VERFAHREN UND VORRICHTUNG ZUR HERSTELLUNG EINER AEROGELFOLIE
PROCÉDÉ ET APPAREIL DE FABRICATION DE FEUILLE D'AÉROGEL

(30) Priority: 19.02.2016 KR 20160019830
(43) Date of publication of application: 28.03.2018
(73) Proprietor: LG Chem, Ltd., Seoul 07336 (KR)
(72) Inventor: KIM, Ye Hon, Daejeon 34122 (KR); LEE, Je Kyun, Daejeon 34122 (KR); OH, Kyoung Shil, Daejeon 34122 (KR)
(74) Representative: Goddar, Heinz J.
(86) International application number: PCT/KR2017/001325
(87) International publication number: WO 2017/142243

(56) References cited:
- EP-A1- 2 813 338
- KR-A- 20110 126 381
- KR-A- 20120 012 836
- US-A- 3 895 087
- US-A- 5 789 075
- US-A1- 2005 192 366
- US-A1- 2005 192 367
- US-A1- 2007 148 435
- US-B1- 6 319 852
- US-B1- 6 319 852

## Description

### TECHNICAL FIELD

The present invention relates to an apparatus and method for manufacturing an aerogel sheet, and more particularly, to an apparatus and method for manufacturing an aerogel sheet having excellent thermal insulation and durability and a uniform thickness.

### BACKGROUND ART

In general, aerogel is a high porosity material having high porosity of about 90% to about 99% in solids that are known up to date. A silica precursor solution is subjected to sol-gel polymerization reaction to prepare gel, and then, a drying process is performed on the prepared gel under supercritical or atmospheric conditions to obtain the aerogel. That is, the aerogel has a pore structure filled with air.

Such the aerogel is lightweight and has physical properties such as heat insulation and sound absorption due to the unique pore structure in which 90% to 99% of an internal space is empty. The greatest advantage of the above-described advantages is the high heat insulation having thermal conductivity of 30 mW/m.k or less, which is significantly lower than thermal conductivity of 36 mW/mk that is thermal conductivity of an organic insulation material such as conventional Styrofoam and the like.

EP 2 813 338 A1 discloses a method for manufacturing an aerogel sheet, the method comprising: a step (a) of preparing silica sol to prepare a silica precursor; a step (b) of preparing a gelling catalyst; a step (c) of injecting silica precursor prepared in the step (a) to a surface of a blanket to impregnate the silica precursor; and a step (d) of injecting the gelling catalyst prepared in the step (b) to the surface of the blanket in which the silica precursor is impregnated to chelate the silica precursor.

US 2005/192367 A1 and US 2005/192366 A1 disclose a surface modification of a silica sol.

US 3,895,087 A discloses an apparatus, wherein two components may be sprayed onto a sheet surface separately.

US 6,319,852 B1 discloses a method of spraying a TEOS/water/ethanol sol onto a substrate and subsequently spraying a gellant to promote chelation.

### DISCLOSURE OF THE INVENTION

### TECHNICAL PROBLEM

There are problems that the aerogel sheet according to the related art has a nonuniform thickness and poor heat insulation and durability.

The present invention has been made to solve the abovementioned problems, and an object of the prevent invention is to provide an apparatus and method for manufacturing an aerogel sheet having excellent heat insulation and durability and a uniform thickness.

### TECHNICAL SOLUTION

To achieve the above-described object, a method for manufacturing an aerogel sheet according to the present invention comprises: a step (a) of preparing a silica precursor by mixing silica sol and a surface modifying agent; a step (b) of preparing a gelling catalyst by mixing ethanol and ammonia water (NH₄OH); a step (c) of spraying the silica precursor prepared in the step (a) to a surface of a blanket to impregnate the blanket with the silica precursor and a step (d) of spraying the gelling catalyst prepared in the step (b) to the surface of the blanket impregnated in the silica precursor to gelate the silica precursor, wherein the step (c) and the step (d) are performed within a conveyor belt that transfers the blanket from one side to the other side thereof and wherein the conveyor belt comprises a scraper comprising a first scraper adjusting a thickness of the silica precursor sprayed to the surface of the blanket and a second scraper adjusting a thickness of the gelling catalyst sprayed to the surface of the blanket, the method, after the step (d), further comprising a step (e) of aging the blanket in which the silica precursor is gelated, and after the step (e), further comprising a step (f) of drying the blanket in which the aging is completed.

In the step (a), tetraethyl orthosilicate (TEOS) and ethanol may be mixed to prepare the silica sol.

The tetraethyl orthosilicate (TEOS) may comprise hydrolyzed TEOS.

In the step (a), the surface modifying agent may comprise hexamethyldisilazane (HMDS).

In the step (d), the gelling catalyst may be sprayed to the surface of the blanket at a rate of 0.035 L/min to 0.012 L/min to leave the gelling catalyst for a time of 8 minutes to 12 minutes and thereby to gelate the silica precursor.

In the step (e), the blanket in which the silica precursor is gelated may be aged for 50 minutes at a temperature of 70°C.

The step (f) may comprise a first drying step of injecting carbon dioxide at a rate of 70 L/min for ten minutes under environments of a temperature of 28°C and a pressure of 7000 kPa (70 bar) to dry the aged blanket, a second drying step of raising up to a temperature of 50°C for 1 hour and 20 minutes to dry the blanket, a third drying step of injecting carbon dioxide at a rate of 0.7 L/min for 20 minutes under a temperature of 50°C and a pressure of 15000 kPa (150 bar) to dry the blanket again, and a fourth drying step of injecting carbon dioxide at a rate of 0.7 L/min for 20 minutes after breaking for 20 minutes to dry the blanket.

In the third drying step of the step (f), the ethanol generated from the blanket may be collected while drying the blanket.

The step (f) may further comprise a step of discharging the carbon dioxide for 2 hours after the fourth drying step.

In the step (f), supercritical drying may be performed in a state in which the blanket is accommodated in the reaction container.

An apparatus for performing the method for manufacturing the aerogel sheet comprises: a supply roller around which a blanket is wound in the form of a roll; a conveyor belt transferring the blanket wound around the supply roller from one side to the other side thereof; a silica precursor supply member for spraying a silica precursor to a surface of the blanket disposed on the conveyor belt to impregnate the silica precursor; a catalyst supply member for spraying gelling catalyst to surface of the blanket disposed on the conveyor belt to gelate the silica precursor; a collection roller winding the blanket, which is transferred up to the outer side by the conveyor belt, in the form of the roll to collect the blanket; and a reaction container which accommodates the roll-shaped blanket collected by the collection roller and in which the accommodated blanket is aged and dried at a high temperature, wherein the silica precursor comprises silica sol and a surface modifying agent, wherein the conveyer belt comprises a scraper comprising a first scraper adjusting a thickness of the silica precursor sprayed to the surface of the blanket and a second scraper adjusting a thickness of the gelling catalyst sprayed to the surface of the blanket.

### ADVANTAGEOUS EFFECTS

The present invention has effects as follows.

First: the present invention may use the method for manufacturing the aerogel sheet to manufacture the aerogel sheet having the superior insulation and durability, particularly, having the uniform thickness.

Second: in the method for manufacturing the aerogel according to the present invention, the silica sol and the surface modifying agent may be mixed to prepare the silica sol precursor, thereby improving the work efficiency.

Third: in the method for manufacturing the aerogel sheet according to the present invention, the tetraethyl orthosilicate (TEOS) and the ethanol may be mixed to obtain the silica sol having the high quality.

Fourth: in the method for manufacturing the aerogel sheet according to the present invention, the hydrolyzed TEOS may be used to obtain the silica sol having the high quality.

Fifth: in the method for manufacturing the aerogel sheet according to the present invention, the ethanol and the ammonia water (NH₄OH) may be mixed to obtain the gelling catalyst having the high quality.

Sixth: in the method for manufacturing the aerogel sheet according to the present invention, the conveyor belt for transferring the blanket from one side to the other side thereof may be used to achieve the continuity of the operation and the simplification of the process.

Seventh: in the method for manufacturing the aerogel sheet according to the present invention, the scraper may be provided on the conveyor belt to uniformly adjust the thickness of the silica sol or the gelling catalyst.

Eighth: in the method for manufacturing the aerogel sheet according to the present invention, the blanket in which the silica sol is gelated may be aged and dried to obtain the aerogel sheet having the high quality.

### BRIEF DESCRIPTION OF THE DRAWINGS

FIG. 1 is a flowchart illustrating a method for manufacturing an aerogel sheet according to the present invention.
FIG. 2 is a view illustrating an apparatus of manufacturing the aerogel sheet according to the present invention.
FIG. 3 is a view of a reaction container provided in the apparatus for manufacturing the aerogel sheet according to the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

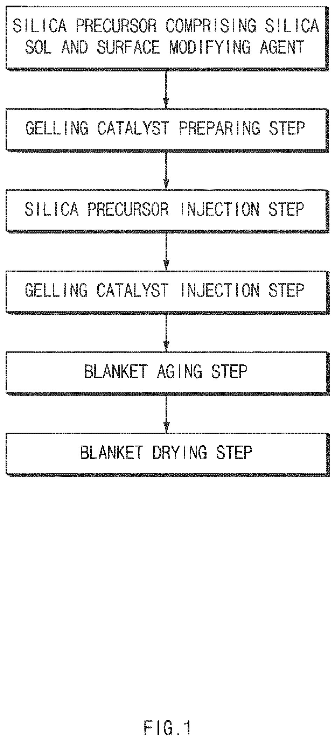

A method for manufacturing an aerogel sheet according to the present invention comprises, as illustrated in FIG. 1, a silica precursor preparing step (a) of preparing a silica precursor, a gelling catalyst preparing step (b) of preparing a gelling catalyst, a silica precursor spraying step (c) of spraying the silica precursor to a surface of a blanket to impregnate the silica precursor, a catalyst spraying step (d) of spraying the gelling catalyst to the surface of the blanket, into which the silica precursor is impregnated, to gelate the silica precursor, a blanket aging step (e) of aging the blanket in which the silica precursor is gelated, and a blanket drying step (f) of drying the aged blanket.

Hereinafter, the method for manufacturing the aerogel sheet according to the present invention will be described in more detail.

### (a) Silica precursor preparing step

The silica precursor preparing step is a step of obtaining a silica precursor. Here, silica sol and a surface modifying agent are mixed to prepare a silica precursor 20.

The present invention may have a technical feature in which the silica sol and the surface modifying agent are mixed to prepare the silica precursor 20, and the prepared silica precursor 20 is impregnated into a blanket 10 to impregnate the silica sol into a surface of the blanket 10 and simultaneously modify the surface of the blanket 10, thereby improving work efficiency and quality of the aerogel sheet.

Here, the silica sol may be prepared by mixing tetraethyl orthosilicate (TEOS) with ethanol. That is, 1.2 kg of TEOS and 2.7 kg of ethanol are provided in a reaction bath (not shown) to prepare the silica sol.

The TEOS may use a solvent having high reactivity with water and be hydrolyzed to more improve reactivity. That is, the hydrolyzed TEOS and the ethanol may be mixed to obtain the silica sol having excellent reactivity.

Also, hexamethyldisilazane (HMDS) may be used as the surface modifying agent. Here, the HMDS is used to change the surface of the blanket to hydrophobicity. That is, in the silica precursor preparing step (a), 40 kg/m³ of the silica sol and 83.5 g of the surface modifying agent are mixed to prepare the silica precursor 20. Here, a mixing ratio of the silica sol and the surface modifying agent may be merely an example and thus may vary according to its application.

### (b) Gelling catalyst preparing step

The gelling catalyst preparing step (b) is a step of obtaining the gelling catalyst. Here, ethanol and ammonia water (NH₄OH) are mixed to prepare the gelling catalyst. That is, 0.5 kg of ethanol and 30 ml of ammonia water (NH₄OH) are mixed in the reaction bath (not shown) to prepare the gelling catalyst.

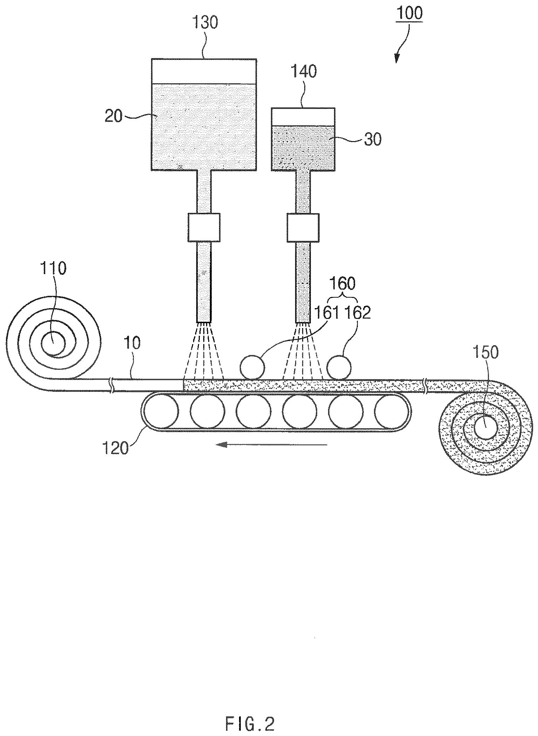

FIG. 2 is a view illustrating an apparatus 100 for manufacturing the aerogel sheet, in which the silica precursor spraying step (c) and the gelling catalyst spraying step (d) according to the present invention are performed.

That is, as illustrated in FIG. 2, the apparatus 100 for manufacturing the aerogel sheet comprises a supply roller 110 around which the blanket 10 is wound in the form of a roll, a conveyor belt 120 for transferring the blanket 10 wound around the supply roller 110 from one side to the other side thereof, a silica precursor supply member 130 for spraying the silica precursor 20 prepared in the step (a) into a surface of the blanket 10 disposed on the conveyor belt 120 to impregnate the silica precursor 20, a catalyst supply member 140 for spraying the gelling catalyst 30 prepared in the step (b) into the surface of the blanket 10 disposed on the conveyor belt 120 to gelate the silica precursor 20, and a collection roller 150 for winding the blanket 10, which is transferred up to the other side by the conveyor belt 120, in the form of the roll to collect the blanket 10.

In the apparatus 100 for manufacturing the aerogel sheet, when the supply roller 110 supplies the wound blanket 10, the conveyor belt 120 transfers the blanket 10 supplied by the supply roller 110 from one side to the other side thereof, and then, the collection roller 150 winds the blanket 10 again to collect the blanket 10. Here, the silica precursor supply member 130 sprays the silica precursor 20 prepared in the step (a) to the surface of the blanket 10 transferred by the conveyor belt 120 to impregnate the silica precursor. Also, the catalyst supply member 140 sprays the gelling catalyst 30 to the surface of the blanket 10 in which the silica precursor is impregnated to gelate the silica precursor.

Here, a scraper 160 for uniformly adjusting a thickness of each of the silica precursor 20 and the gelling catalyst 30, which are sprayed to the blanket 10, is provided on the conveyor belt 120. That is, the scraper 160 comprises a first scraper 161 for adjusting a thickness of the silica precursor 20 sprayed to the surface of the blanket 10 and a second scraper 162 for adjusting a thickness of the gelling catalyst 30 sprayed to the surface of the blanket 10.

That is, the first scraper 161 and the second scraper 162 may have the same shape and be installed to be adjustable in height on a top surface of the conveyor belt 120 to uniformly adjust the thickness of each of the silica precursor 20 and the gelling catalyst 30.

Hereinafter, the silica precursor spraying step (c) and the gelling catalyst spraying step (d) using the apparatus 100 for manufacturing the aerogel sheet will be described in detail.

### (c) Silica precursor spraying step

In the silica precursor spraying step (c), the silica precursor 20 prepared in the step (a) is sprayed and impregnated to the surface of the blanket. That is, the silica precursor 20 prepared in the step (a) is injected into and stored in the silica precursor supply member 130. Then, when the blanket 10 is transferred up to a lower side of the silica precursor supply member 130 by the conveyor belt 120, the silica precursor 20 is sprayed through the silica precursor supply member 130 and impregnated into the surface of the blanket 10.

Here, the silica precursor 20 sprayed to the blanket 10 may have a uniform thickness while passing through the first scraper 161 installed on the conveyor belt 120. That is, the first scraper 161 may uniformly adjust the thickness of the silica precursor 20 by blocking the silica precursor 20 having a predetermined thickness or more so that the silica precursor 20 does not pass.

### (d) Gelling catalyst spraying step

In the gelling catalyst spraying step (d), the gelling catalyst 30 is sprayed to the surface of the blanket 10 in which the silica precursor is impregnated in the step (c) to gelate the silica precursor. That is, the gelling catalyst 30 prepared in the step (b) is injected into and stored in the catalyst supply member 140. Then, when the blanket 10 into which the silica precursor is impregnated is transferred up to a lower side of the catalyst supply member 140 by the conveyor belt 120, the gelling catalyst 30 is sprayed to the surface of the blanket 10 through the catalyst supply member 140 to gelate the silica precursor.

Here, the catalyst supply member 140 may spray the stored gelling catalyst at a preset rate and then leave the gelling catalyst 30 for a preset time to stably gelate the silica precursor. That is, the catalyst supply member 140 may spray the gelling catalyst 30 to the surface of the blanket 10 at a rate of 0.035 L/min to 0.012 L/min and then leave the gelling catalyst 30 for 8 minutes to 12 minutes to gradually gelate the silica precursor.

Particularly, the catalyst supply member 140 may uniformly adjust the gelation of the silica precursor by varying the spraying rate of the gelling catalyst 30 according to density of the silica precursor 20 impregnated in the blanket 10.

The blanket 10 in which the silica precursor is gelated is wound and collected in the form of the roll by the collection roller 150, and the aging step and the drying step are performed on the collected blanket 10 to complete the aerogel sheet. Here, a reaction container 170 is used.

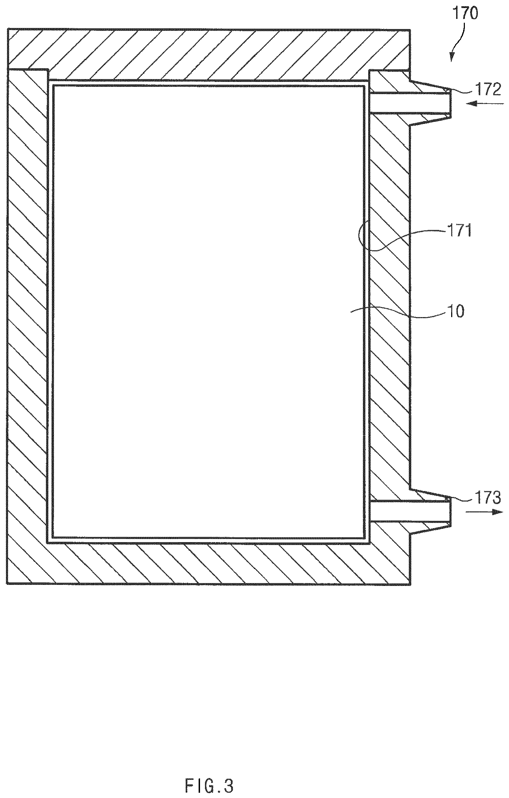

FIG. 3 is a view of the reaction container 170 according to the present invention.

That is, the reaction container 170 has an accommodation space 171 in which the blanket 10 collected in the form of the roll is accommodated. Also, the reaction container 170 has one end in which an injection hole 171 connected to the accommodation space is formed and the other end in which a discharge hole 173 connected to the accommodation space 171 is formed.

Hereinafter, the blanket aging step (e) and the blanket drying step (f) using the reaction container 170 will be described.

### (e) Blanket aging step

The blanket aging step (e) is a step of aging the blanket in which the silica precursor is gelated. Here, the blanket 10 collected in the step (d) is accommodated in the accommodation space 171 of the reaction container 170, and then, the blanket 10 is aged for 50 minutes while heating the accommodation space 171 of the reaction container 170 up to a temperature of 70°C to uniformize tissues of the blanket 10.

Here, in the blanket aging step (e), the blanket is left at room temperature (or a temperature of 25°C) for 10 minutes before being aged in the reaction container 170 to perform the aging on the blanket. That is, the aging for inducing the stable gelation of the silica precursor may be performed to more uniformize the tissues of the blanket.

### (f) Blanket drying step

In the blanket drying step (f), the aged blanket 10 is dried to complete a silica gel sheet. Here, in the blanket drying step (f), supercritical drying is performed in a state in which the blanket 10 is accommodated in the reaction container 170. That is, the blanket drying step (f) comprises a first drying step of injecting carbon dioxide at a rate of 70 L/min for ten minutes under environments of a temperature of 28°C and a pressure of 7000 kPa (70 bar) to dry the blanket 10 of which the surface is modified, a second drying step of raising to a temperature of 50°C for 1 hour and 20 minutes to dry the blanket 10, a third drying step of injecting carbon dioxide at a rate of 0.7 L/min for 20 minutes again under a temperature of 50°C and a pressure of 15000 (150 bar) to dry the blanket 10, and a fourth drying step of injecting carbon dioxide at a rate of 0.7 L/min for 20 minutes after breaking for 20 minutes to dry the blanket 10, The above-described drying steps may be performed to increase a drying rate of the blanket 10.

In the third drying step of the blanket drying step (f), ethanol is generated in the reaction container 170 by chemical reaction between the carbon dioxide and the blanket 10, and the ethanol generated in the reaction container 170 is discharged through the discharge hole 173 and then is collected.

Also, the blanket drying step (f) comprises a discharging step of discharging the carbon dioxide for 2 hours after the fourth drying step. Thus, a gradual environmental change is induced in the blanket 10 to uniformize the tissues of the blanket 10.

The aerogel sheet may be manufactured through the method for manufacturing the aerogel sheet according to the present invention to uniformize the tissues of the blanket and improve insulation and durability of the aerogel sheet.

## Claims

1. A method for manufacturing an aerogel sheet, the method comprising:
a step (a) of preparing a silica precursor by mixing silica sol and a surface modifying agent;
a step (b) of preparing a gelling catalyst by mixing ethanol and ammonia water (NH₄OH);
a step (c) of spraying the silica precursor prepared in the step (a) to a surface of a blanket to impregnate the blanket with the silica precursor and
a step (d) of spraying the gelling catalyst prepared in the step (b) to the surface of the blanket impregnated in the silica precursor to gelate the silica precursor,
wherein the step (c) and the step (d) are performed within a conveyor belt that transfers the blanket from one side to the other side thereof and
wherein the conveyor belt comprises a scraper comprising a first scraper adjusting a thickness of the silica precursor sprayed to the surface of the blanket and a second scraper adjusting a thickness of the gelling catalyst sprayed to the surface of the blanket,
the method, after the step (d), further comprising a step (e) of aging the blanket in which the silica precursor is gelated, and
after the step (e), further comprising a step (f) of drying the blanket in which the aging is completed.

2. The method of claim 1, wherein, in the step (a), tetraethyl orthosilicate (TEOS) and ethanol are mixed to prepare the silica sol.

3. The method of claim 1, wherein, in the step (a), the surface modifying agent comprises hexamethyldisilazane (HMDS).

4. The method of claim 1, wherein, in the step (d), the gelling catalyst is sprayed to the surface of the blanket at a rate of 0.035 L/min to 0.012 L/min to leave the gelling catalyst for a time of 8 minutes to 12 minutes and thereby to gelate the silica precursor.

5. The method of claim 1, wherein, in the step (e), the blanket in which the silica precursor is gelated is aged for 50 minutes at a temperature of 70 °C.

6. The method of claim 1, wherein the step (f) comprises a first drying step of injecting carbon dioxide at a rate of 70 L/min for ten minutes under environments of a temperature of 28°C and a pressure of 7000 kPa (70 bar) to dry the aged blanket, a second drying step of raising up to a temperature of 50 °C for 1 hour and 20 minutes to dry the blanket, a third drying step of injecting carbon dioxide at a rate of 0.7 L/min for 20 minutes under a temperature of 50 °C and a pressure of 15000 kPa (150 bar) to dry the blanket again, and a fourth drying step of injecting carbon dioxide at a rate of 0.7 L/min for 20 minutes after breaking for 20 minutes to dry the blanket.

7. The method of claim 6, wherein, in the third drying step of the step (f), the ethanol generated from the blanket is collected while drying the blanket.

8. The method of claim 6, wherein the step (f) further comprises a step of discharging the carbon dioxide for 2 hours after the fourth drying step.

9. An apparatus of manufacturing an aerogel sheet, the apparatus comprising:
a supply roller around which a blanket is wound in the form of a roll;
a conveyor belt transferring the blanket wound around the supply roller from one side to the other side thereof;
a silica precursor supply member for spraying a silica precursor to a surface of the blanket disposed on the conveyor belt to impregnate the silica precursor;
a catalyst supply member for spraying a gelling catalyst to surface of the blanket disposed on the conveyor belt to gelate the silica precursor;
a collection roller winding the blanket, which is transferred up to the outer side by the conveyor belt, in the form of the roll to collect the blanket; and
a reaction container which accommodates the roll-shaped blanket collected by the collection roller and in which the accommodated blanket is aged and dried at a high temperature,
wherein the silica precursor comprises silica sol and a surface modifying agent,
wherein the conveyer belt comprises a scraper comprising a first scraper adjusting a thickness of the silica precursor sprayed to the surface of the blanket and a second scraper adjusting a thickness of the gelling catalyst sprayed to the surface of the blanket.

## Patentansprüche

1. Verfahren zum Herstellen eines Aerogelbogens, wobei das Verfahren umfasst:
einen Schritt (a) zum Herstellen einer Silicavorstufe durch Mischen von Silicasol und eines Oberflächenmodifizierungsmittels;
einen Schritte (b) zum Herstellen eines Gelierungskatalysators durch Mischen von Ethanol und Ammoniakwasser (NH₄OH);
einen Schritt (c) zum Sprühen der in dem Schritt (a) hergestellten Silicavorstufe auf eine Oberfläche einer Decke, um die Decke mit der Silicavorstufe zu imprägnieren und
einen Schritt (d) zum Sprühen des in dem Schritt (b) hergestellten Gelierungskatalysators auf die Oberfläche der in der Silicavorstufe imprägnierten Decke, um die Silicavorstufe zu gelieren,
wobei der Schritt (c) und der Schritt (d) innerhalb eines Förderbandes durchgeführt werden, das die Decke von einer Seite zu der anderen Seite desselben transferiert,
wobei das Förderband einen Abkratzer umfasst, der einen ersten Abkratzer, der eine Dicke der auf die Oberfläche der Decke gesprühten Silicavorstufe einstellt,
und einen zweiten Abkratzer, der eine Decke des auf die Oberfläche der Decke gesprühten Gelierungskatalysators einstellt, umfasst,
wobei das Verfahren, nach dem Schritt (d), ferner einen Schritt (e) eines Alterns der Decke, in der die Silicavorstufe geliert ist, umfasst, und
nach dem Schritt (e) weiter umfassend eine Schritt (f) zum Trocknen der Decke, in der die Alterung vollständig ist.

2. Verfahren nach Anspruch 1, wobei, im Schritt (a), Tetraethylorthosilikat (TEOS) und Ethanol gemischt werden, um das Silicasol herzustellen.

3. Verfahren nach Anspruch 1, wobei, im Schritt (a), das
Oberflächenmodifizierungsmittel Hexamethyldisilazan (HMDS) umfasst.

4. Verfahren nach Anspruch 1, wobei, im Schritt (d), der Gelierungskatalysator auf die Oberfläche der Decke mit einer Geschwindigkeit von 0,035 l/min bis 0,012 l/min gesprüht wird, um den Gelierungskatalysator für eine Zeit von acht Minuten bis zwölf Minuten zu belassen und dadurch die Silicavorstufe zu gelieren.

5. Verfahren nach Anspruch 1, wobei, im Schritt (e), die Decke, in der die Silicavorstufe geliert wird, für 50 Minuten bei einer Temperatur von 70 °C gealtert wird.

6. Verfahren nach Anspruch 1, wobei der Schritt (f) einen ersten Trocknungsschritt des Injizierens von Kohlendioxid mit einer Geschwindigkeit von 70 l/min für zehn Minuten unter Umgebungen einer Temperatur von 28°C und einem Druck von 7.000 kPa (70 bar), um die gealterte Decke zu trocknen, einen zweiten Trocknungsschritt des Anhebens auf eine Temperatur von 50 °C für eine Stunde und 20 Minuten, um die Decke zu trocknen, einen dritten Trocknungsschritt des Injizierens von Kohlendioxid mit einer Geschwindigkeit von 0,7 l/min für 20 Minuten unter einer Temperatur von 50°C und einem Druck von 15.000 kPa (150 bar), um die Decke erneut zu trocknen, und einen vierten Trocknungsschritt des Injizierens von Kohlendioxid mit einer Geschwindigkeit von 0,7 l/min für 20 Minuten nach Unterbrechung für 20 Minuten, um die Decke zu trocknen, umfasst.

7. Verfahren nach Anspruch 6, wobei, in dem dritten Trocknungsschritt des Schritts (f), das aus der Decke erzeugte Ethanol gesammelt wird, während die Decke getrocknet wird.

8. Verfahren nach Anspruch 6, wobei der Schritt (f) ferner einen Schritt des Abgebens des Kohlendioxids für zwei Stunden nach dem vierten Trocknungsschritt umfasst.

9. Vorrichtung zum Herstellen eines Aerogelbogens, wobei die Vorrichtung umfasst:
eine Versorgungsrolle, um die eine Decke in der Form einer Rolle gewunden ist;
ein Förderband, das die um die Versorgungsrolle gewundene Decke von einer Seite zu der anderen Seite desselben transferiert;
ein Silicavorstufenversorgungselement zum Sprühen einer Silicavorstufe auf eine Oberfläche der Decke, die auf dem Förderband angeordnet ist, um die Silicavorstufe zu imprägnieren;
ein Katalysatorversorgungselement zum Sprühen eines Gelierungskatalysators auf eine Oberfläche der Decke, die auf dem Förderband angeordnet ist, um die Silicavorstufe zu gelieren und;
eine Sammelrolle, die die Decke aufwickelt, die zu der äußeren Seite durch das Förderband transferiert wird, in der Form der Rolle, um die Decke aufzusammeln;
einen Reaktionsbehälter, der die rollenförmige Decke, aufgesammelt durch die Sammelrolle, aufnimmt, und in welchem die aufgenommene Decke gealtert und bei einer hohen Temperatur getrocknet wird,
wobei die Silicavorstufe Silicasol und ein Oberflächenmodifizierungsmittel umfasst,
wobei das Förderband einen Abkratzer umfasst, der einen ersten Abkratzer, der eine Dicke der auf die Oberfläche der Decke gesprühten Silicavorstufe einstellt, und einen zweiten Abkratzer, der eine Dicke des auf die Oberfläche der Decke gesprühten Gelierungskatalysators einstellt, umfasst.

## Revendications

1. Procédé de fabrication d'une feuille d'aérogel, le procédé comprenant :
une étape (a) consistant à préparer un précurseur de silice en mélangeant un sol de silice et un agent de modification de surface ;
une étape (b) consistant à préparer un catalyseur de gélification en mélangeant de l'éthanol et de l'eau ammoniacale (NH₄OH) ;
une étape (c) consistant à pulvériser le précurseur de silice préparé à l'étape (a) sur une surface d'une couverture pour imprégner la couverture avec le précurseur de silice, et
une étape (d) consistant à pulvériser le catalyseur de gélification préparé à l'étape (b) sur la surface de la couverture imprégnée dans le précurseur de silice pour gélifier le précurseur de silice,
dans lequel l'étape (c) et l'étape (d) sont effectuées dans une bande transporteuse qui transfère la couverture d'un côté à l'autre côté de celle-ci, et
dans lequel la bande transporteuse comprend un racloir comprenant un premier racloir ajustant une épaisseur du précurseur de silice pulvérisé sur la surface de la couverture et un deuxième racloir ajustant une épaisseur du catalyseur de gélification pulvérisé sur la surface de la couverture,
le procédé, après l'étape (d), comprenant en outre une étape (e) consistant à vieillir la couverture dans laquelle le précurseur de silice est gélifié, et
après l'étape (e), comprenant en outre une étape (f) consistant à sécher la couverture dans laquelle le vieillissement est effectué.

2. Procédé selon la revendication 1, dans lequel, à l'étape (a), de l'orthosilicate de tétraéthyle (TEOS) et de l'éthanol sont mélangés pour préparer le sol de silice.

3. Procédé selon la revendication 1, dans lequel, à l'étape (a), l'agent de modification de surface comprend de l'hexaméthyldisilazane (HMDS).

4. Procédé selon la revendication 1, dans lequel, à l'étape (d), le catalyseur de gélification est pulvérisé sur la surface de la couverture à raison de 0,035 L/min à 0,012 L/min pour laisser le catalyseur de gélification pendant une durée de 8 minutes à 12 minutes et pour ainsi gélifier le précurseur de silice.

5. Procédé selon la revendication 1, dans lequel, à l'étape (e), la couverture dans laquelle le précurseur de silice est gélifié est vieillie pendant 50 minutes à une température de 70°C.

6. Procédé selon la revendication 1, dans lequel l'étape (f) comprend une première étape de séchage consistant à injecter du dioxyde de carbone à raison de 70 L/min pendant dix minutes dans un environnement à une température de 28°C et une pression de 7000 kPa (70 bar) pour sécher la couverture vieillie, une deuxième étape de séchage consistant à porter à une température de 50°C pendant 1 heure et 20 minutes pour sécher la couverture, une troisième étape de séchage consistant à injecter du dioxyde de carbone à raison de 0,7 L/min pendant 20 minutes à une température de 50°C et une pression de 15000 kPa (150 bar) pour sécher la couverture de nouveau, et une quatrième étape de séchage consistant à injecter du dioxyde de carbone à raison de 0,7 L/min pendant 20 minutes après une interruption de 20 minutes pour sécher la couverture.

7. Procédé selon la revendication 6, dans lequel, dans la troisième étape de séchage de l'étape (f), l'éthanol généré par la couverture est collecté pendant le séchage de la couverture.

8. Procédé selon la revendication 6, dans lequel l'étape (f) comprend en outre une étape consistant à décharger le dioxyde de carbone pendant 2 heures après la quatrième étape de séchage.

9. Appareil de fabrication d'une feuille d'aérogel, l'appareil comprenant :
un rouleau d'alimentation autour duquel une couverture est enroulée sous la forme d'un rouleau ;
une bande transporteuse transférant la couverture enroulée autour du rouleau d'alimentation d'un côté à l'autre côté de celle-ci ;
un organe d'alimentation en précurseur de silice pour pulvériser un précurseur de silice sur une surface de la couverture disposé sur la bande transporteuse pour imprégner le précurseur de silice ;
un organe d'alimentation en catalyseur pour pulvériser un catalyseur de gélification sur une surface de la couverture disposé sur la bande transporteuse pour gélifier le précurseur de silice ;
un rouleau de collecte enroulant la couverture, laquelle est transférée jusqu'à l'autre côté par la bande transporteuse, sous la forme du rouleau pour collecter la couverture ; et
un contenant de réaction qui accueille la couverture en forme de rouleau collectée par le rouleau de collecte et dans lequel la couverture accueillie est vieillie et séchée à une température élevée,
dans lequel le précurseur de silice comprend un sol de silice et un agent de modification de surface,
dans lequel la bande transporteuse comprend un racloir comprenant un premier racloir ajustant une épaisseur du précurseur de silice pulvérisé sur la surface de la couverture et un deuxième racloir ajustant une épaisseur du catalyseur de gélification pulvérisé sur la surface de la couverture.
